# EUROPÄISCHE PATENTSCHRIFT

(11) **EP 0 564 796 B1**
(45) Veröffentlichungstag und Bekanntmachung des Hinweises auf die Patenterteilung: **19.01.2000**
(21) Anmeldenummer: 93102898.9
(22) Anmeldetag: 25.02.1993
(51) Int. Cl.: H01M 8/06

(54) **Verfahren zur Erzeugung elektrischer Energie aus Biorohstoffen**
Process for generating electrical energy from biomass
Procédé pour la génération d'énergie électrique à partir de biomasses

(30) Priorität: 13.03.1992 DE 4207975; 20.08.1992 DE 4227485; 16.10.1992 DE 4235017
(43) Veröffentlichungstag der Anmeldung: 13.10.1993
(73) Patentinhaber: Binsmaier, Hannelore, geb. Gallin-Ast, D-85253 Erdweg-Grossberghofen (DE)
(72) Erfinder: Johnssen, Wolf, Dr., 81675 München (DE)
(74) Vertreter: Honke, Manfred, Dr.-Ing.

(56) Entgegenhaltungen:
- EP-A- 0 345 908
- EP-A- 0 376 219
- DE-A- 1 596 042
- FR-A- 1 340 155
- FR-A- 1 458 408
- US-A- 3 393 100
- US-A- 4 128 700
- US-A- 4 921 765
- US-A- 4 988 580
- ENERGY BIOMASS WASTES Bd. 9TH, 1985, Seiten 1343 - 1368 EDWARD I. WAN 'TECHNICAL AND ECONOMIC ASSESMENT OF BIOMASS-BASED FUEL CELL POWER SYSTEMS'
- CHEMICAL ABSTRACTS, vol. 90, no. 22, 28. Mai 1979, Columbus, Ohio, US; abstract no. 171430c, HODAM ROBERT H. ET AL 'Small scale gasification of biomass to produce a low BTU gas'
- JOURNAL OF POWER SOURCES. Bd. 37, Nr. 1/2, Januar 1992, LAUSANNE CH Seiten 271 - 277 B. ROHLAND ET AL 'Hydrogen and fuel cells - the clean energy system'
- PROCEEDINGS OF THE 25TH INTERSOCIETY ENERGY CONVERSION ENGINEERING CONFERENCE Bd. 3, 12. August 1990, NEW YORK Seiten 213 - 217 WALTER G. PARKER 'WESTINGHOUSE SOLID OXIDE FUEL CELL PROGRAM -A 1990 STATUS REPORT'
- PATENT ABSTRACTS OF JAPAN vol. 17, no. 71 (E-1319)12. Februar 1993
- Book no. , , '', RÖMPP CHEMIE LEXIKON, BD. 1, S. 540, 9. AUFL.,

## Beschreibung

Die Erfindung betrifft ein Verfahren zur Erzeugung von elektrischer Energie aus C₄-Pflanzen als Biorohstoff, insbesondere aus perennierenden C₄-Schilfpflanzen. - Biorohstoffe bezeichnet allgemein alle sogenannten regenerativen Rohstoffe, d. h. solche Rohstoffe, die mit einer Produktionsrate auf biologischem Wege wiederherstellbar sind, welche in etwa der Verbrauchsrate entspricht, im Gegensatz zu den fossilen Rohstoffen, die wesentlich langsamer gebildet als verbraucht werden. Ein Biorohstoff kann mit prinzipiell noch intakter Zellstruktur oder mit desintegrierter Struktur, beispielsweise als feines Pulver zur Verfügung gestellt werden. Biorohstoffe können auch als sogenannter biologisch-organischer Müll anfallen. Biorohstoffe enthalten im wesentlichen die Elemente Kohlenstoff, Wasserstoff, Sauerstoff und Stickstoff.

Die direkte Verstromung von Wasserstoff mittels Brennstoffzellen ist gut bekannt. Brennstoffzellen haben gegenüber Wärmekraftmaschinen den Vorteil, daß sie nicht den grundsätzlichen thermodynamischen Beschränkungen des Wirkungsgrades aus dem Carnot'schen Kreislauf unterworfen sind.

Brennstoffzellen sind theoretisch in der Lage, die Verbrennungswärme aus der Reaktion von Wasserstoff mit Sauerstoff zu Wasser praktisch vollständig in elektrische Energie umzuwandeln. In der Praxis sind mit Brennstoffzellen daher ohne besondere Schwierigkeiten deutlich höhere Wirkungsgrade als mit Wärmekraftmaschinen erreichbar. Dies setzt allerdings voraus, daß die Katalysatoren der Brennstoffzellen nicht durch Katalysatorgifte, welche möglicherweise in dem Wasserstoff enthalten sein können, vergiftet werden.

Molekularer Wasserstoff steht nicht als Rohstoff zur Verfügung, sondern muß aus wasserstoffhaltigen Rohstoffen gewonnen werden. Die Erzeugung von Wasserstoff aus Wasser mittels normaler Elektrolyse verbraucht mehr Strom als mit dem Wasserstoff erzeugt werden kann und kommt daher ohne weiteres nicht in Frage. Die katalytische Wasserspaltung in Wasserstoff und Sauerstoff ist sehr langsam und liefert mit hohem Aufwand nur geringe Mengen, weswegen eine kommerzielle Nutzung unattraktiv ist.

Seit langem gut bekannt sind die Erzeugung von sogenanntem Synthesegas aus Kohle, welches im wesentlichen Wasserstoff und Kohlenmonoxid enthält, und die hierfür erforderlichen Anlagen. Dieser Prozeß wird als Kohlevergasung bezeichnet. In einer sogenannten Watershift-Reaktion kann das Kohlenmonoxid in dem Synthesegas unter Zugabe von Wasserdampf und bei erhöhter Temperatur in Wasserstoff und Kohlendioxid umgesetzt werden.

Grundsätzlich ist die Verwendung von Synthesegas zum Betrieb von Brennstoffzellen möglich, in der Praxis haben sich jedoch erhebliche Nachteile gezeigt. Zum ersten enthält Kohle in der Regel rohstoff-bürtigen Schwefel, der als gasförmige Schwefelverbindungen im Synthesegas mitgeschleppt wird. Schwefelverbindungen sind jedoch in der Regel hochgradige Katalysatorgifte, welche den Katalysator einer Brennstoffzelle und somit die Brennstoffzelle selbst irreversibel deaktivieren können. Im übrigen sind Schwefelgase eine aus Gründen des Umweltschutzes unerwünschte Emission. Zum zweiten ist die Erzeugung von Synthesegas aus Kohle insgesamt besonders teuer und aufwendig, da sich die Aufwendungen aus beispielsweise dem Untertagebergbau, dem Kohlenvergasungsprozeß und der erforderlichen Entschwefelung akkumulieren.

In dem Aufsatz von Edward I. Wan "Technical and Economic Assessment of Biomass based on Fuel Cell Power Systems" (Energie Biomass Wastes, Band 9, 1985, Seiten 1343 bis 1368) geht es unter anderem um die Verdampfung holzförmiger Stoffe. Das solchermaßen erzeugte Produktgas wird einer sogenannten "Water-gas-shift-Reaktion" unterworfen durch welche zusätzlich Wasserstoff gebildet wird. Außerdem spricht diese Entgegenhaltung die Möglichkeit an, das Produktgas mittels einer Brennstoffzelle zu verstromen. Abgesehen davon kann ein Teilstrom des vorgenannten Gases für die Wasserdampferzeugung verbrannt werden.

B. Rohland stellt in seinem Aufsatz "Hydrogen and fuel cells - the clean energy system" (Journal of Power Sources, 37 (1992), January, Seite 271 bis 277) Wasserstoff- und Flüssig-Brennstoffzellen gegenüber. In diesem Zusammenhang wird auch die Verstromung von durch Verdampfung hergestelltem Biogas erwähnt. Vorliegend ist auch eine Entschwefelung vorgesehen.

### I

Der Erfindung liegt das technische Problem zugrunde, auf einfache und zuverlässige Art und Weise elektrische Energie aus billigen, regenerierbaren Rohstoffen zu erzeugen, und zwar bei hohem Wirkungsgrad und mit geringer Schadstoffemission.

### II

Zur Lösung dieses Problems lehrt die Erfindung ein Verfahren zur Erzeugung von elektrischer Energie aus C₄-Pflanzen als Biorohstoff, insbesondere aus perennierenden C₄-Schilfpflanzen, mit geringem Gehalt an rohstoff-bürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoffe werden in einem Oxidationsreaktor allotherm mit einem im wesentlichen Wasserdampf enthaltenden Vergasungsmittel zu einem Brennstoffgas vergast, welches Kohlenmonoxid und Wasserstoff enthält,
b) daß aus dem Orxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in transformiertes Brennstoffgas aus Wasserstoff und Kohlendioxid umgewandelt,
d) es werden für die Verstromung Brennstoffzellen verwendet, die eine poröse Anode, eine poröse Kathode und einen Phosphorsäure enthaltenden Elektrolyten aufweisen,
wobei die Wärme für die Vergasungsreaktion in den Oxidationsreaktor mit Hilfe eines Wärmeträgergases über einen Wärmetauscher eingetragen wird und in dem Oxidationsreaktor das Sauerstoff/Biorohstoff-Mengenverhältnis und die Gasphasentemperatur so eingestellt werden, daß das Brennstoffgas praktisch stickstoffoxidfrei ausfällt.

C₄-Pflanzen lassen sich bekanntermaßen schnell und billig heranziehen und weisen praktisch keinen Schwefel auf. Nach "RÖMPP" Chemie Lexikon, 9. Auflage, Band 1, Seite 540 handelt es sich bei C4-Pflanzen um solche Pflanzen, die während der Photosynthese als erstes Kohlendioxid-Aufnahme-Produkt eine vier C-Atome enthaltene Verbindung bilden. Dies impliziert eine Kohlendioxid-Anreicherung in den Pflanzen und einhergehend damit ein verstärktes Wachstum.

Zu den C₄-Pflanzen gehören Mais, Zuckerrohr sowie mehrere Hirsearten.

(Hieran schließen sich die ursprünglichen Anmeldungsunterlagen Spalte 6, Zeile 23 bis Spalte 8, Zeile 14 unverändert an).

### III

Eine unabhängige und selbständige Lösung des eingangs angegebenen technischen Problems lehrt ein Verfahren zur Erzeugung von elektrischer Energie aus C₄-Pflanzen, insbesondere aus perennierenden C₄-Pflanzen, mit geringem Gehalt an rohstoff-bürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoffe werden in einem Oxidationsreaktor allotherm mit einem im wesentlichen Wasserdampf enthaltenden Vergasungsmittel zu einem Brennstoffgas vergast, welches Kohlenmonoxid und Wasserstoff enthält,
b) daß aus dem Oxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in transformiertes Brennstoffgas aus Wasserdampf und Kohlendioxid umgewandelt,
d) es werden für die Verstromung Brennstoffzellen verwendet, die eine poröse Anode, eine poröse Kathode und einen Elektrolyten aus einer carbonathaltigen Schmelze aufweisen.

(Hieran schließen sich die ursprünglichen Anmeldungsunterlagen Spalte 2, Zeile 51 bis Spalte 5, Zeile 52 unverändert an).

### IV

Eine weitere Lösung des der Erfindung zugrundeliegenden technischen Problems ist gegeben durch ein Verfahren zur Erzeugung von elektrischer Energie aus C₄-Pflanzen als Biorohstoff, insbesondere aus perennierenden C4-Schilfpflanzen, mit geringem Gehalt an rohstoff-bürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoffe werden in einem Oxidationsreaktor allotherm mit einem im wesentlichen Wasserdampf enthaltenden Vergasungsmittel zu einem Brennstoffgas vergast, welches Kohlenmonoxid und Wasserstoff enthält,
b) das aus dem Oxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in transformiertes Brennstoffgas aus Wasserdampf und Kohlendioxid umgewandelt,
d) es werden für die Verstromung Brennstoffzellen verwendet, die eine poröse Anode, eine poröse Kathode und einen festen Elektrolyten aus einem Metalloxid aufweisen, mit der Maßgabe, daß die Brennstoffzellen bei zumindest 800° C betrieben werden.

Auch hier kann bei der Brenngaserzeugung autotherm oder allotherm gearbeitet werden.

Aufgrund der sehr hohen Betriebstemperatur von Brennstoffzellen mit einem festen Elektrolyten aus einem Metalloxid ist nicht nur eine katalytische Wirkung der Elektroden entbehrlich sondern es stellen sich auch ohne weiteres sehr hohe Reaktionsraten des Brennstoffgases an der Anode und eines Verbrennungsmittels an der Kathode ein, da die thermische Energie der Gase erheblich über der Aktivierungsenergie der heterogenen Dissoziationsreaktionen liegt. Hohe Reaktionsraten ermöglichen ihrerseits hohe spezifische elektrische Leistungen der Brennstoffzellen. Daher werden die Brennstoffzellen in bevorzugter Ausführungsform der Erfindung bei zumindest 1000° C, vorzugsweise bei zumindest 1200° C, betrieben. Betriebstemperaturen in dieser Höhe sind ohne weiteres einrichtbar, wenn die Materialien der Anode, der Kathode und des Elektrolyten hinsichtlich ihrer thermischer Ausdehnungskoeffizienten in üblicher Weise aufeinander abgestimmt oder angepaßt sind. Es versteht sich, daß für die Materialien der Anode und der Kathode auch ausreichend korrosionsbeständige Stoffe gewählt werden.

Eine hohe Ionenleitfähigkeit des festen Elektrolyten ist einrichtbar, wenn als Elektrolyt eine Mischung aus Zirkoniumoxid und Calciumoxid oder aus Zirkoniumoxid und Yttriumoxid verwendet wird. Eine hohe Ionenleitfähigkeit in Verbindung mit den hohen Reaktionsraten an den Elektroden gewährleistet eine besonders hohe spezifische Leistung der Brennstoffzellen. In weiterer Ausbildung wird hier vorteilhafterweise als Anodenmaterial ein keramisches Metall, vorzugsweise aus Zirkoniumoxiden mit Nickel oder Cobalt, verwendet. Als Kathodenmaterial wird vorteilhafterweise LaNiO₃ oder dotiertes Indiumoxid eingesetzt.

Zur Reduzierung von möglicherweise störendem Kohlenmonoxid in dem Brennstoffgas kann das Brennstoffgas in einem Watershift-Reaktor unter Zufuhr von Wasserdampf und von Wärme behandelt werden zur Umwandung von Kohlenmonoxid in Wasserstoff und Kohlendioxid. Ein eventuell störender Kohlenwasserstoffgehalt des Brenngases kann dadurch verringert werden, daß das Brennstoffgas unmittelbar vor der Verstromung durch einen Reformer mit einem Katalysator, vorzugsweise mit einem Übergangsmetall-Katalysator, höchstvorzugsweise mit einem Nickel-Katalysator, geführt wird, wobei der Katalysator auf demselben Temperaturniveau wie die Brennstoffzellen betrieben wird.

Sehr hohe spezifische Leistungen der Brennstoffzellen werden erhalten, wenn Brennstoffzellen verwendet werden, deren Kathode, Elektrolyt und Anode schichtweise in Dünnfilmtechnik auf einen porösen, inerten Träger aufgebracht sind. Aufgrund der geringen Schichtdicke des festen Elektrolyten ist der innere Widerstand der Brennstoffzellen sehr niedrig. Es versteht sich, daß die Porosität des Trägers eine offene Porosität ist, um einen Gaszutritt zu der unmittelbar aufgebrachten Elektrode zu erlauben.

Brennstoffzellen mit einem festen Elektrolyten aus einem Metalloxid sind an sich und für sich aus der Praxis bekannt, werden jedoch nahezu ausschließlich in der Weltraumfahrt eingesetzt, wobei das Brennstoffgas mitgeführter Wasserstoff ist, welcher zuvor auf konventionelle Weise gewonnen und gespeichert wurde.

Das erfindungsgemäße Verfahren kann bezüglich der Teiloxidation in dem Oxidationsreaktor in verschiedenen Ausführungsformen betrieben werden. In einer Ausführungsform wird die Teiloxidation unter Zufuhr von extern erzeugter Wärme und mit einem im wesentlichen Wasserdampf enthaltenden Vergasungsmittel durchgeführt. Diese Verfahrensweise ist in anderem Zusammenhang als allotherme Vergasung bekannt. Die Wärme für die Teiloxidation kann dabei vorzugsweise durch Verbrennung von Biorohstoff oder von Brennstoffgas erzeugt werden. Vorteilhafterweise wird die Wärme für die Teiloxidation mittels eines üblichen Wärmeträgergases über einen Wärmetauscher in den Oxidationsreaktor eingetragen. In einer anderen Ausführungsform des erfindungsgemäßen Verfahrens wird die Teiloxidation ohne Zufuhr von extern erzeugter Wärme und mit einem im wesentlichen Wasserdampf und molekularen Sauerstoff bzw. Luft enthaltenden Vergasungsmittel durchgeführt. Diese Verfahrensweise ist in anderem Zusammenhang als autotherme Vergasung bekannt. Dabei erfolgen mit dem Anteil molekularen Sauerstoffs im Vergasungsmittel exotherme Oxidationsreaktionen, wodurch "in situ" die erforderliche Wärme für die endotherme Reaktion von Wasserdampf und Biorohstoff entsteht.

In einer weiteren Ausführungsform erfolgt bei dem erfindungsgemäßen Verfahren die Teiloxidation der Biorohstoffe in dem Oxidationsreaktor thermisch z. B. mit Luft als Vergasungsmittel. Die Verwendung von Luft als Vergasungsmittel ist ohne weiteres möglich, sofern die thermodynamischen Randbedingungen bezüglich des Sauerstoff/Biorohstoff-Mengenverhältnisses beachtet werden. Luft ist allseits verfügbar und billig.

In einer weiteren Ausführungsform erfolgt bei den erfindungsgemäßen Verfahren die Teiloxidation der Biorohstoffe in dem Oxidationsreaktor thermisch z. B. mit Luft als Vergasungsmittel. Die Verwendung von Luft als Vergasungsmittel ist ohne weiteres möglich, sofern die thermodynamischen Rahmenbedingungen bezüglich des Sauerstoff/Biorohstoff-Mengenverhältnisses beachtet werden. Luft ist allseits verfügbar und billig.

### V

Im folgenden wird die Erfindung anhand lediglich Ausführungsbeispiele darstellenden Zeichnungen näher erläutert. Es zeigen
- **Fig. 1**: das Schema einer Anlage zur Durchführung des erfindungsgemäßen Verfahrens mit einem Elektrolyten aus einer karbonatsalzhaltigen Schmelze,
- **Fig. 2**: das Schema einer Anlage zur Durchführung des erfindungsgemäßen Verfahrens mit einem phosphorsäurehaltigen Elektrolyt und
- **Fig. 3**: das Schema einer Anlage zur Durchführung des erfindungsgemäßen Verfahrens und einer "Solid Oxide"-Brennstoffzelle.

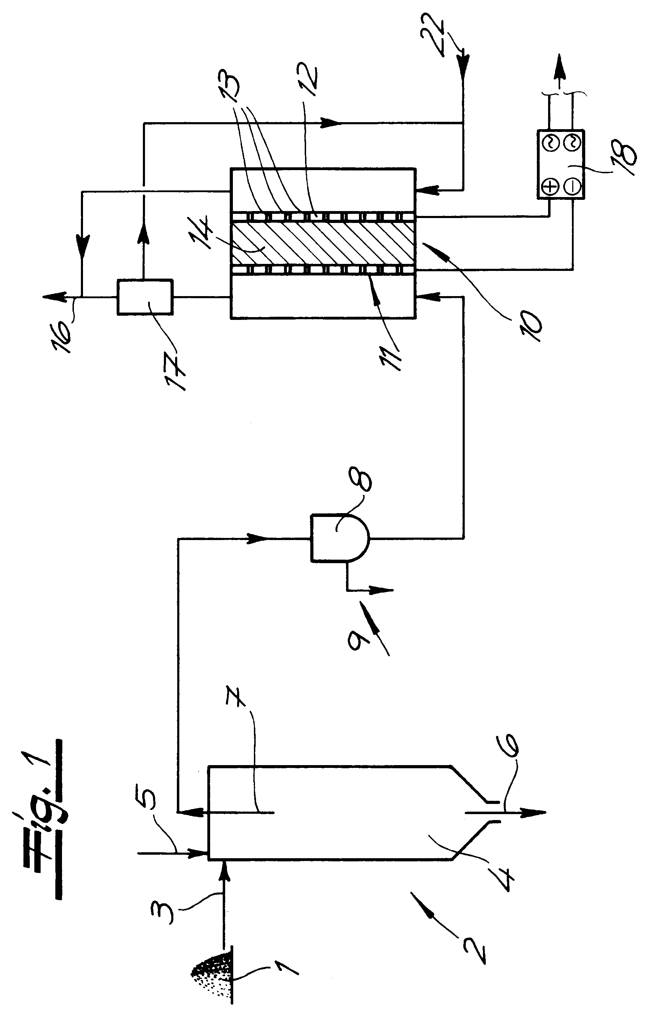

Gemäß Fig. 1 wird aus Pflanzen, insbesondere aus C₄-Pflanzen ein zerstückelter und getrockneter Biorohstoff 1 hergestellt. Der Biorohstoff 1 wird einem Reaktiosraum 4 eines Oxidationsreaktors 2, über ein Rohr 3 zugeführt. Aus einer Vergasungsmittelversorgungseinrichtung wird Luft 5 als Vergasungsmittel zugeführt. Die Oxidation des Biorohstoffes in dem Reaktionsraum 4 des Oxidationsreaktors 2 wird über die zugeführte Luft und eine Wärmezufuhr so gesteuert bzw. so geregelt, daß nur eine Teiloxidation des Biorohstoffes 1 zu Wasserstoff und zu Kohlenmonoxid stattfindet und daß praktisch keine Stickstoffoxide entstehen. Hierzu können die üblichen Sensoren und Stellglieder eingerichtet sein, die jedoch der Übersichtlichkeit halber nicht dargestellt sind. Teilweise oder vollständig oxidierter fester Biorohstoff 1 wird der Ascheableitung 6 entnommen. Wasserstoff und Kohlenmonoxid werden als Brennstoffgas mit der Brennstoffgassammelleitung 7 entnommen und einem Abscheider 8 zugeführt. In dem Abscheider 8 wird das Brennstoffgas von Schwebstoffen befreit, welche in der Schwebstoffsammelleitung 9 getrennt abgeführt werden. Das von Schwebstoffen befreite Brennstoffgas wird dann einer Anode 11 einer Brennstoffzelle 10 zugeführt. Aus der Luftversorgungseinrichtung 22 wird Luft entnommen, zunächst mit Kohlendioxid angereichert und dann als Verbrennungsmittel einer Kathode 12 der Brennstoffzelle 10 zugeführt. Zwischen der Anode 11 und der Kathode 12 ist ein Elektrolyt 14 aus einer Mischung von Alkalimetall-Karbonaten und Alkalimetall-Aluminaten eingeschlossen, der auf einer Temperatur von ca. 650° C gehalten wird. Die Anode 11 und die Kathode 12 weisen offene Poren 13 auf, die einen Kontakt des Elektrolyten 14 mit dem Brennstoffgas bzw. de Verbrennungsmittel ermöglichen, jedoch den pastösen Elektrolyten sicher einschließen. An der Kathode 12 reagieren Kohlendioxid und Sauerstoff unter Aufnahme von Elektronen aus der Kathode zu Karbonat-Ionen, die im Elektrolyten gelöst werden. Die Karbonat-Ionen wandern zur Anode 11 und reagieren mit dem Wasserstoff des Brennstoffgases zu Wasser und Kohlendioxid und mit dem Kohlenmonoxid des Brennstoffgases zu Kohlendioxid unter Abgabe von Elektronen an die Anode 11. Die folglichu zwischen der negativen Anode 11 und der positiven Kathode 12 anliegende Gleichspannung wird einem Wechselrichter und Spannungswandler 18 zugeführt und in eine übliche Netzspannung umgewandelt. Das anodenseitig entstehende Brennstoffabgas wird durch einen Kohlendioxid-Recycler 17 einem Auspuff 16 zugeführt. Dabei wird dem Brennstoffabgas in dem Kohlendioxid-Recycler 17 Kohlendioxid entzogen, und dem kathodenseitig zuströmenden Verbrennungsmittel zugefügt. Das kathodenseitig entstehende Verbrennungsmittelabgas wird direkt dem Auspuff 16 zugeführt.

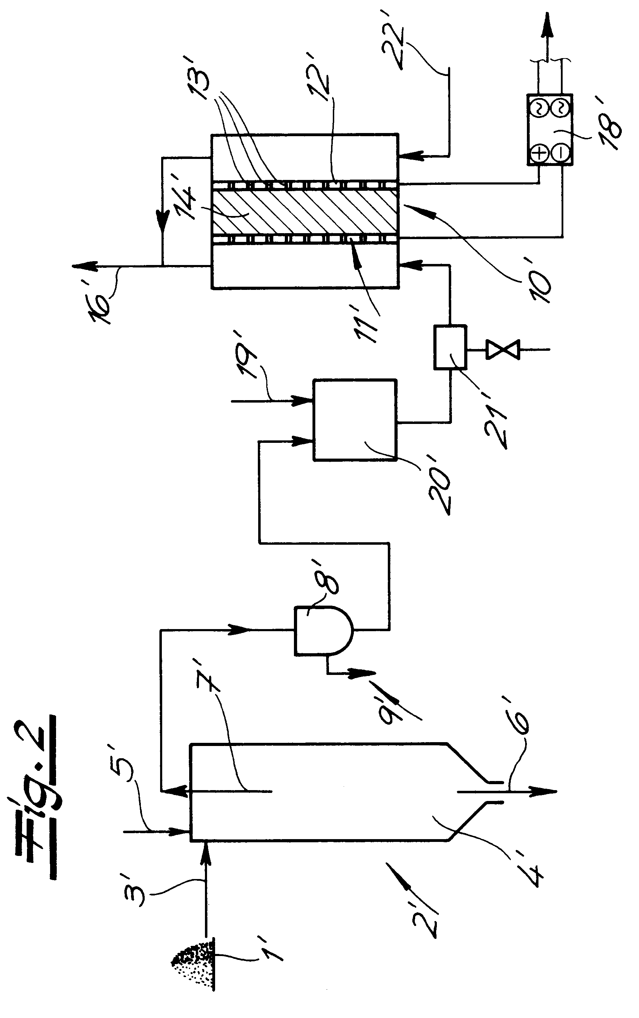

Bei dem Verfahren gemäß der Fig. 2 wird der Biorohstoff 1 entsprechend dem in Fig. 1 dargestellten Verfahren zu einem Brennstoffgas umgewandelt und von Schwebstoffen befreit. Diesbezüglich wird daher auf die Beschreibung zu Fig. 1 verwiesen. Bezugszeichen mit gleicher Nummer in beiden Figuren entsprechen einander. Das weitere Verfahren mit einem säurehaltigen Elektrolyten wird folgend im Detail beschrieben. Das von Schwebstoffen befreite Brennstoffgas wird zunächst einem Watershift-Reaktor 20' zugeführt. Diesem Watershift-Reaktor wird außerdem aus einer Heißdampfquelle 19' Wasserdampf in ausreichender Menge und mit der erforderlichen Temperatur zugeführt, so daß Kohlenmonoxid des Brennstoffgases in einer Watershift-Reaktion zu Wasserstoff und Kohlenmonoxid umgesetzt wird. Es entsteht ein Brennstoffgas mit Wasserstoff und Kohlendioxid als Hauptkomponenten, welches in einem Wasserabscheider 21' von überschüssigem Wasserdampf und/oder Wasser aus der Watershift-Reaktion befreit wird. Das insofern behandelte und von Wasser befreite Brennstoffgas wird dann einer Anode 11' einer Brennstoffzelle 10' zugeführt. Aus der Luftversorgungseinrichtung 22' wird Luft entnommen und als Verbrennungsmittel einer Kathode 12' der Brennstoffzelle 10' zugeführt. Zwischen der Anode 11' und der Kathode 12' ist ein Elektrolyt 14' aus Phosphorsäure mit ca. 10 % Wasser eingeschlossen, der auf einer Temperatur von ca. 150° C gehalten wird. Die Anode 11' und die Kathode 12' weisen offene Poren 13' auf, die einen Kontakt des Elektrolyten 14' mit dem Brennstoffgas bzw. dem Verbrennungsmittel ermöglichen, jedoch den Elektrolyten 14 aufgrund geeigneter Abstimmung der Oberflächenspannungen sicher einschliessen. An der Anode 11' wird der Wasserstoff des Brennstoffgases unter Abgabe von Elektronen an die Anode 11' als Proton im Elektrolyten 14' gelöst. Die Protonen wandern zur Kathode 12' und reagieren mit dem Sauerstoff des Verbrennungsmittels unter Aufnahme von Elektronen von der Kathode 12' zu Wasser. Die Anode 11' und die Kathode 12' weisen eine katalytisch aktive Oberfläche aus Platin auf. Zumindest bei der Anode 11' ist dem Platin Rhodium zulegiert. Die zwischen der negativen Anode 11' und der positiven Kathode 12' anliegende Gleichspannung wird einem Wechselrichter und Spannungswandler 18' zugeführt und in eine übliche Netzspannung umgewandelt. Das anodenseitig austretende Brennstoffabgas, welches praktisch nur noch Kohlendioxid aus der Watershift-Reaktion enthält, sowie das kathodenseitig austretende Verbrennungsmittelabgas, welches neben Luftbestandteilen lediglich Wasser enthält, können ohne weiteres über einen Auspuff 16' abgeblasen werden.

Im folgenden werden Stoffbilanzen der Teiloxidation des Biorohstoffes zu Brennstoffgas eines Ausführungsbeispiels der Erfindung mit allothermer Vergasung angegeben. Es wurde jeweils ein Biorohstoff eingesetzt, der 29,4 mol-% Kohlenstoff, 48,3 mol-% Wasserstoff, 21,9 mol-% Sauerstoff, 3,0 mol-% Stickstoff und 0,3 mol-% Schwefel enthielt. Die allotherme Vergasung erfolgte stets bei 750° C, jedoch bei unterschiedlichen Drücken, und zwar bei 40 bar, bei 10 bar und bei 2 bar. Die allotherme Vergasung bei 40 bar ergab ein Brennstoffgas mit 47 Vol.-% Wasserstoff, 11,6 Vol.-% Kohlenmonoxid, 28,3 Vol.-% Kohlendioxid und 12,7 % Methan. Die Netto-Gasmenge betrug 1,27 m³ /kg Biorohstoff (Normaldruck). Die allotherme Vergasung bei 10 bar ergab ein Brennstoffgas mit 57,6 Vol.-% Wasserstoff, 15,8 Vol-% Kohlenmonoxid, 22,8 Vol.-% Kohlendioxid und 3,6 Vol.-% Methan. Die Netto-Gasmenge betrug 1,67 m³ /kg Biorohstoff (Normaldruck). Die allotherme Vergasung bei 2 bar ergab ein Brennstoffgas mit 61,4 Vol.% Wasserstoff, 17,6 Vol.-% Kohlenmonoxid, 20,7 Vol.-% Kohlendioxid und 0,3 Vol.-% Methan. Die Netto-Gasmenge betrug 1,84 m³ /kg Biorohstoff (Normaldruck). Die Gasanalysen erfolgten im thermodynamischen Gleichgewicht. In allen Fällen war das Brennstoffgas praktisch stickoxidfrei. Schwefeloxide waren nur in geringsten Mengen nachweisbar, welche auch bei längerem Betrieb die Leistung der Brennstoffzelle nicht beinflußten. Für den Betrieb einer Brennstoffzelle mit phosphorsäurehaltigem Elektrolyt war bei der allothermen Vergasung ein vergleichsweise wenig aufwendiger Watershift-Reaktor erforderlich, da das Brennstoffgas beim Austritt aus dem Oxidationsreaktor bereits relativ wenig Kohlenmonoxid und relativ viel Kohlendioxid enthielt. Möglicherweise kann in der Ausführungsform der Erfindung mit allothermer Vergasung und phosphorsäurehaltigem Elektrolyt auch ganz auf einen Watershift-Reaktor verzichtet werden. - Es versteht sich, daß im Rahmen der Erfindung freiwerdende Wärme auf geeignete Weise in das erfindungsgemäße Verfahren rückgekoppelt werden kann.

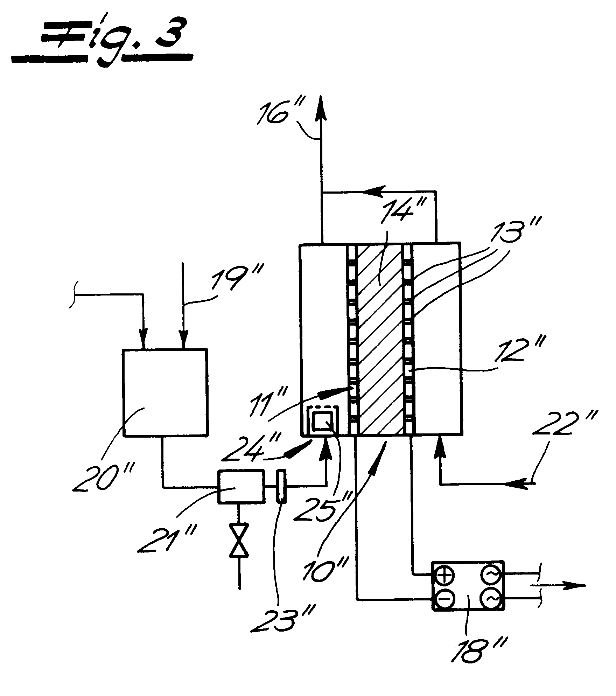

Bei der Ausführungsform nach Fig. 3 wird die Vergasung so durchgeführt, wie es die Fig. 1 und 2 beschreiben. Das in der schon beschriebenen Art und Weise von Schwebstoffen befreite Brennstoffgas wird dann einem Watershift-Reaktor 20'' zugeführt. Diesem Watershif-Reaktor 20'' wird außerdem aus einer Heißdampfquelle 19'' Wasserdampf in ausreichender Menge und mit der erforderlichen Temperatur zugeführt. Es entsteht ein Brennstoffgas mit Wasserstoff und Kohlendioxid als Hauptkomponenten, welches in einem Waserabscheider 21'' von überschüssigem Wasserdampf und/oder Wasser aus der Watershift-Reaktion befreit wird. Das insofern behandelte und von Wasser befreite Brennstoffgas wird zunächst über einen üblichen Kohlendioxidabscheider 23'' und anschließend durch einen Reformer 24'' mit einem Katalysator 25'' aus Nickel geführt. Da der Reformer 24'' baulich mit der Brennstoffzelle 10'' vereinigt ist, ist die Temperatur des Katalysators 25'' praktisch gleich der Temperatur der Brennstoffzelle 10'' von ca. 1000° C. Das dem Reformer 24'' entströmende und von Kohlenwasserstoff-Resten befreite Brennstoffgas strömt dann über die Anode 11'' der Brennstoffzelle 10''. Aus einer Versorgungseinrichtung 22'' wird Luft entnommen und als Verbrennungsmittel der Kathode 12'' der Brennstoffzelle 10'' zugeführt. Die Anode 11'' kann beispielsweise aus einem keramischen Metall mit Zirkoniumoxiden und Cobald bestehen. Als Kathodenmaterial kommt LaNiO₃ in Frage. Der Elektrolyt 14'' weist im Ausführungsbeispiel Zirkoniumoxid und Yttriumoxid auf. Die Anode 11'' und die Kathode 12'' weisen Perforationen 13'' als Poren auf, die einen Kontakt des Elektrolyten 14'' mit dem Brennstoffgas bzw. dem Verbrennungsmittel ermöglichen. An der Anode 11'' wird der Wasserstoff des Brennstoffgases unter Reaktion mit Sauerstoffionen aus dem Elektrolyten 14'' zu Wasser verbrannt. Die Sauerstoffionen werden an der Kathode 12'' aus dem Verbrennungsmittel gewonnen und durch den Elektrolyten 14'' zur Anode transportiert. Die zwischen der negativen Anorde 11'' und der positiven Kathode 12'' anliegende Gleichspannung wird einem Wechselrichter und Spannungswandler 18'' zugeführt und in eine übliche Netzspannung umgewandelt. Das anodenseitig austretende Brennstoffabgas enthält praktisch nur Wasser und das kathodenseitig austretende Verbrennungsmittelabgas enthält im wesentlichen Stickstoff. Beides kann ohne weiteres über einen Auspuff 16'' abgeblasen werden.

## Patentansprüche

1. Verfahren zur Erzeugung von elektrischer Energie aus C4-Pflanzen als Biorohstoff, insbesondere aus perennierenden C4-Schilfpflanzen, mit geringem Gehalt an rohstoffbürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoffe werden in einem Oxidationsreaktor allotherm mit einem im wesentlichen Wasserdampf enthaltenden Vergasungsmittel zu einem Brennstoffgas vergast, welches Kohlenmonoxid und Wasserstoff enthält,
b) das aus dem Oxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in transformiertes Brennstoffgas aus Wasserstoff und Kohlendioxid umgewandelt,
d) es werden für die Verstromung Brennstoffzellen verwendet, die eine poröse Anode, eine poröse Kathode und einen Phosphorsäure enthaltenden Elektrolyten aufweisen,
wobei die Wärme für die Vergasungsreaktion in den Oxidationsreaktor mit Hilfe eines Wärmeträgergases über einen Wärmetauscher eingetragen wird und in dem Oxidationsreaktor das Sauerstoff/Biorohstoff-Mengenverhältnis und die Gasphasentemperatur so eingestellt werden, daß das Brennstoffgas praktisch stickstoffoxidfrei anfällt.

2. Verfahren zur Erzeugung von elektrischer Energie aus C4-Pflanzen, insbesondere aus perennierenden C4-Pflanzen, mit geringem Gehalt an rohstoffbürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoff werden in einem Oxidationsreaktor allotherm mit einem im wesentlichen Wasserdampf enthaltenden Vergasungsmittel zu einem Brennstoffgas vergast, welche Kohlenmonoxid und Wasserstoff enthält,
b) das aus dem Oxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in ein transformiertes Brennstoffgas aus Wasserdampf und Kohlendioxid umgewandelt,
d) es werden für die Verstromung Brennstoffzellen verwendet, die eine poröse Anode, eine poröse Kathode und einen Elektrolyten aus einer karbonathaltigen Schmelze aufweisen.

3. Verfahren zur Erzeugung von elektrischer Energie aus C4-Pflanzen als Biorohstoff, insbesonder aus perennierenden C4-Schilfpflanzen, mit geringem Gehalt an rohstoffbürtigem Schwefel, die im wesentlichen die Elemente Kohlenstoff, Wasserstoff, Sauerstoff und Stickstoff enthalten, mit Hilfe von Brennstoffzellen, wobei die Kombination der folgenden Merkmale verwirklicht ist:
a) Die Biorohstoffe werden in einem Oxidationsreaktor allotherm mit einem im wesentlichen Wasserdampf enthaltenden Vergasungsmittel zu einem Brennstoffgas vergast, welches Kohlenmonoxid und Wasserstoff enthält,
b) das aus dem Oxidationsreaktor abgezogene Brennstoffgas wird in einem Abscheider von Schwebstoffen befreit,
c) in einem Watershift-Reaktor wird das von den Schwebstoffen befreite Brennstoffgas unter Zuführung von Wasserdampf und Wärme in transformiertes Brennstoffgas aus Wasserdampf und Kohlendioxid umgewandelt,
d) es werden für die Verstromung Brennstoffzellen verwendet, die eine poröse Anode, eine poröse Kathode und einen festen Elektrolyten aus einem Metalloxid aufweisen, mit der Maßgabe, daß die Brennstoffzellen bei zumindest 800° C betrieben werden.

4. Verfahren nach Anspruch 1, wobei in den Brennstoffzellen bei der Verstromung mit einer Temperatur von über 130° C und mit einem Platin/Rhodium-Katalysator gearbeitet wird.

5. Verfahren nach Anspruch 1, wobei in den Brennstoffzellen bei der Verstromung mit einer Temperatur von unter 130° C und einem Platin-Katalysator mit Molybdän und/oder Wolframoxiden gearbeitet wird.

6. Verfahren nach Anspruch 2, wobei die karbonatsalzhaltige Schmelze im wesentlichen aus Alkalimetall-Karbonatsalzen und Alkalimetallaluminaten gebildet wird und wobei die Schmelze durch die Betriebstemperatur der Brennstoffzelle in einen pastösen Fließzustand versetzt wird.

7. Verfahren nach Anspruch 3, wobei die Brennstoffzellen bei zumindest 1000° C, vorzugsweise bei zumindest 1200° C, betrieben werden.

8. Verfahren nach einem der Ansprüche 3 oder 7, wobei als Elektrolyt eine Mischung aus zirkoniumoxid und Calciumoxid oder aus zirkoniumoxid und Yttriumoxid verwendet wird.

9. Verfahren nach einem der Ansprüche 3 bis 8, wobei als Anode eine keramisches Metall, vorzugsweise aus Zirkoniumoxiden mit Nickel oder Cobald, verwendet wird.

10. Verfahren nach einem der Ansprüche 3 bis 9, wobei als Kathode LaNiO₃ oder dotiertes Indiumoxid verwendet wird.

## Claims

1. A process for generating electrical energy from C4 plants as biomass, particularly from perennial C4 reed plants, which have a low content of sulphur originating from the raw material and which essentially contain the elements carbon, hydrogen, oxygen and nitrogen, by means of fuel cells, wherein the combination of the following features is put into effect:
a) the biomass is gasified allothermically in an oxidation reactor, with a gasification medium which essentially contains steam, to form a fuel gas which contains carbon monoxide and hydrogen,
b) the fuel gas taken off from the oxidation reactor is freed from suspended matter in a separator,
c) the fuel gas which is freed from suspended matter is converted, in a water shift reactor which is supplied with steam and heat, into a transformed fuel gas of hydrogen and carbon dioxide,
d) fuel cells which comprise a porous anode, a porous cathode and an electrolyte which contains phosphoric acid are used for the conversion into electrical energy,
wherein the heat for the gasification reaction is supplied to the oxidation reactor by means of a heat transfer gas via a heat exchanger, and in the oxidation reactor the quantitative ratio of oxygen to biomass and the temperature of the gas phase are adjusted so that the fuel gas is formed practically free from nitrogen.

2. A process for generating electrical energy from C4 plants as biomass, particularly from perennial C4 plants, which have a low content of sulphur originating from the raw material and which essentially contain the elements carbon, hydrogen, oxygen and nitrogen, by means of fuel cells, wherein the combination of the following features is put into effect:
a) the biomass is gasified allothermically in an oxidation reactor, with a gasification medium which essentially contains steam, to form a fuel gas which contains carbon monoxide and hydrogen,
b) the fuel gas taken off from the oxidation reactor is freed from suspended matter in a separator,
c) the fuel gas which is freed from suspended matter is converted, in a water shift reactor which is supplied with steam and heat, into a transformed fuel gas of hydrogen and carbon dioxide,
d) fuel cells which comprise a porous anode, a porous cathode and an electrolyte comprising a carbonate-containing melt are used for the conversion into electrical energy.

3. A process for generating electrical energy from C4 plants as biomass, particularly from perennial C4 reed plants, which have a low content of sulphur originating from the raw material and which essentially contain the elements carbon, hydrogen, oxygen and nitrogen, by means of fuel cells, wherein the combination of the following features is put into effect:
a) the biomass is gasified allothermically in an oxidation reactor, with a gasification medium which essentially contains steam, to form a fuel gas which contains carbon monoxide and hydrogen,
b) the fuel gas taken off from the oxidation reactor is freed from suspended matter in a separator,
c) the fuel gas which is freed from suspended matter is converted, in a water shift reactor which is supplied with steam and heat, into a transformed fuel gas of hydrogen and carbon dioxide,
d) fuel cells which comprise a porous anode, a porous cathode and a solid electrolyte comprising a metal oxide are used for the conversion into electrical energy, with the proviso that the fuel cells are operated at at least 800°C.

4. A process according to claim 1, wherein a temperature higher than 130°C and a platinum/rhodium catalyst are employed in the fuel cells during the conversion into electrical energy.

5. A process according to claim 1, wherein a temperature lower than 130°C and a platinum catalyst comprising molybdenum and/or oxides of tungsten are employed in the fuel cells during the conversion into electrical energy.

6. A process according to claim 2, wherein the melt which contains carbonate salts is substantially formed from alkali metal carbonate salts and alkali metal aluminates, and wherein a paste-like state of flow is imparted to the melt due to the operating temperature of the fuel cell.

7. A process according to claim 3, wherein the fuel cells are operated at at least 1000°C, preferably at at least 1200°C.

8. A process according to either one of claims 3 or 7, wherein a mixture of zirconium oxide and calcium oxide or of zirconium oxide and yttrium oxide is used as the electrolyte.

9. A process according to any one of claims 3 to 8, wherein a metal-ceramic, preferably comprising zirconium oxides with nickel or cobalt, is used as the anode.

10. A process according to any one of claims 3 to 9, wherein LaNiO₃ or doped indium oxide is used as the cathode.

## Revendications

1. Procédé de production d'énergie électrique au moyen de piles à combustible à partir de matière de base biologique constituée par des végétaux en C₄, en particulier par des roseaux pérennants en C₄, à faible teneur en soufre originaire de la matière de base et contenant comme principaux éléments du carbone, de l'hydrogène, de l'oxygène et de l'azote, dans lequel la combinaison des caractéristiques suivantes est mise en oeuvre :
a) les matières de base biologiques sont gazéifiées dans un réacteur à oxydation en mode allotherme avec un agent de gazéification renfermant essentiellement de la vapeur d'eau pour obtenir un gaz combustible qui contient du monoxyde de carbone et de l'hydrogène,
b) le gaz combustible retiré du réacteur à oxydation est débarrassé dans un séparateur des matières en suspension,
c) le gaz combustible débarrassé des matières en suspension est converti dans un réacteur 〈〈 watershift 〉〉, moyennant un apport de vapeur d'eau et de chaleur, en gaz combustible transformé constitué d'hydrogène et de dioxyde
de carbone, d) pour la production de courant, on utilise des piles à combustible qui comportent une anode poreuse, une cathode poreuse et un électrolyte contenant de l'acide phosphorique,
la chaleur intervenant dans la réaction de gazéification étant introduite dans le réacteur à oxydation à l'aide d'un gaz caloporteur par l'intermédiaire d'un échangeur de chaleur et, dans le réacteur à oxydation, la proportion oxygène/matière de base biologique et la température de la phase gazeuse étant réglées de façon que le gaz combustible obtenu soit pratiquement exempt d'azote.

2. Procédé de production d'énergie électrique au moyen de piles à combustible à partir de végétaux en C₄, en particulier de roseaux pérennants en C₄, à faible teneur en soufre originaire de la matière de base et contenant comme principaux éléments du carbone, de l'hydrogène, de l'oxygène et de l'azote, dans lequel la combinaison des caractéristiques suivantes est mise en oeuvre :
a) les matières de base biologiques sont gazéifiées dans un réacteur à oxydation en mode allotherme avec un agent de gazéification renfermant essentiellement de la vapeur d'eau pour obtenir un gaz combustible qui contient du monoxyde de carbone et de l'hydrogène,
b) le gaz combustible retiré du réacteur à oxydation est débarrassé dans un séparateur des matières en suspension,
c) le gaz combustible débarrassé des matières en suspension est converti dans un réacteur 〈〈 watershift 〉〉, moyennant un apport de vapeur d'eau et de chaleur, en gaz combustible transformé constitué de vapeur d'eau et de dioxyde de carbone,
d) pour la production de courant, on utilise des piles à combustible qui comportent une anode poreuse, une cathode poreuse et un électrolyte constitué d'un bain de carbonate fondu.

3. Procédé de production d'énergie électrique au moyen de piles à combustible à partir de matière de base biologique constituée par des végétaux en C₄, en particulier par des roseaux pérennants en C₄, à faible teneur en soufre originaire de la matière de base et contenant comme principaux éléments du carbone, de l'hydrogène, de l'oxygène et de l'azote, dans lequel la combinaison des caractéristiques suivantes est mise en oeuvre :
a) les matières de base biologiques sont gazéifiées dans un réacteur à oxydation en mode allotherme avec un agent de gazéification renfermant essentiellement de la vapeur d'eau pour obtenir un gaz combustible qui contient du monoxyde de carbone et de l'hydrogène,
b) le gaz combustible retiré du réacteur à oxydation est débarrassé dans un séparateur des matières en suspension,
c) le gaz combustible débarrassé des matières en suspension est converti dans un réacteur 〈〈 watershift 〉〉, moyennant un apport de vapeur d'eau et de chaleur, en gaz combustible transformé constitué de vapeur d'eau et de dioxyde de carbone,
d) pour la production de courant, on utilise des piles à combustible qui comportent une anode poreuse, une cathode poreuse et un électrolyte solide en oxyde métallique, sachant que les piles à combustible fonctionnent à au moins 800 °C.

4. Procédé selon la revendication 1, dans lequel dans les piles à combustible on travaille à une température supérieure à 130 °C et avec un catalyseur en platine rhodié lors de la production de courant.

5. Procédé selon la revendication 1, dans lequel dans les piles à combustible on travaille à une température inférieure à 130 °C et avec un catalyseur en platine avec du molybdène et/ou des oxydes de tungstène lors de la production de courant.

6. Procédé selon la revendication 2, dans lequel le bain de carbonate fondu est formé pour l'essentiel de carbonates de métaux alcalins et d'aluminates de métaux alcalins, et dans lequel le bain acquiert, sous l'effet de la température de fonctionnement de la pile à combustible, un état d'écoulement pâteux.

7. Procédé selon la revendication 3, dans lequel les piles à combustible fonctionnent à au moins 1 000 °C, de préférence à au moins 1 200 °C.

8. Procédé selon l'une des revendications 3 ou 7, dans lequel l'électrolyte utilisé est un mélange d'oxyde de zirconium et d'oxyde de calcium ou d'oxyde de zirconium et d'oxyde d'yttrium.

9. Procédé selon l'une des revendications 3 à 8, dans lequel l'anode utilisée est en métal céramique, de préférence en oxydes de zirconium avec du nickel ou du cobalt.

10. Procédé selon l'une des revendications 3 à 9, dans lequel la cathode utilisée est en LaNiO₃ ou en oxyde d'indium dopé.
